# EUROPEAN PATENT SPECIFICATION

(11) **EP 0 315 726 B1**
(45) Date of publication and mention of the grant of the patent: **02.02.1994**
(21) Application number: 87830399.9
(22) Date of filing: 11.11.1987
(51) Int. Cl.: E04B 2/76

(54) **Method of connecting profiled sections for movable modular panel systems**
Verfahren zur Verbindung von Profilen in tragbaren modularen Paneelsystemen
Procédé pour la liaison de profilés dans des systèmes de panneaux modulaires portables

(43) Date of publication of application: 17.05.1989
(73) Proprietor: Cinti, Stefano, Bologna (IT)
(72) Inventor: Cinti, Stefano, Bologna (IT)
(74) Representative: Sassatelli, Franco T., Dr.

(56) References cited:
- WO-A-85/04220
- US-A- 3 226 897
- US-A- 3 534 517

## Description

The invention relates to a method of connecting profiled sections for use when assembling movable panels to form closed spaces, and it solves, by using a very quick assembly system, the problem of long assembly times. Using the invented system, the assembly and disassembly do not need preparatory operations for preparing the various parts, maintenance costs are avoided almost completely, and savings are quickly achieved since the parts have a life which is much longer in comparison with the life of systems currently used.

Two fundamental parts are used for assembling the movable panels of known systems (for example the prior art taught in the Patent US-A-3 534 517); in this the present system is not different from previous systems. These parts are a vertical support and a horizontal connecting rail.

To assemble the panels of the current known system, the vertical support, which is provided with vertical grooves, is positioned vertically. One end of a lower horizontal connecting rail is housed within the grooves, and the opposite end of the connecting rail is housed in the grooves of a second vertical support. A second upper horizontal connecting rail is similarly housed between the vertical supports. A panel is inserted between the upper and lower rails, and further panels are similarly assembled, creating a continuous wall. The connection between the vertical support and the connecting rail is achieved by clamping, by means of a screw, an expansion chuck inserted into the connecting rail, thereby exerting pressure on the vertical support.

This clamping operation must be carried out four times for each panel, since two screws are necessary for each connecting rail, and two connecting rails are necessary for each wall panel. Moreover this operation requires the continuous employment of a skilled worker, who, by means of a hexagonal allen key fitted in the screw head, must tighten the screw and hence the chuck, and must check the state of the connection. A worker is required for all these operations, which take a lot of time. Morevoer, the thread of the screw may fail, due to the thread material being overstressed.

Although still using a vertical support and horizontal connecting rails, the method of connecting profiled sections for movable modular panel systems according to the invention provides a new connection method that avoids all the aforementioned clamping operations and the use of tools, since the connection is achieved by means of finger pressure without the need for screws or chucks. This is achieved with a method according to claim 1.

Reference is now made to the drawings.

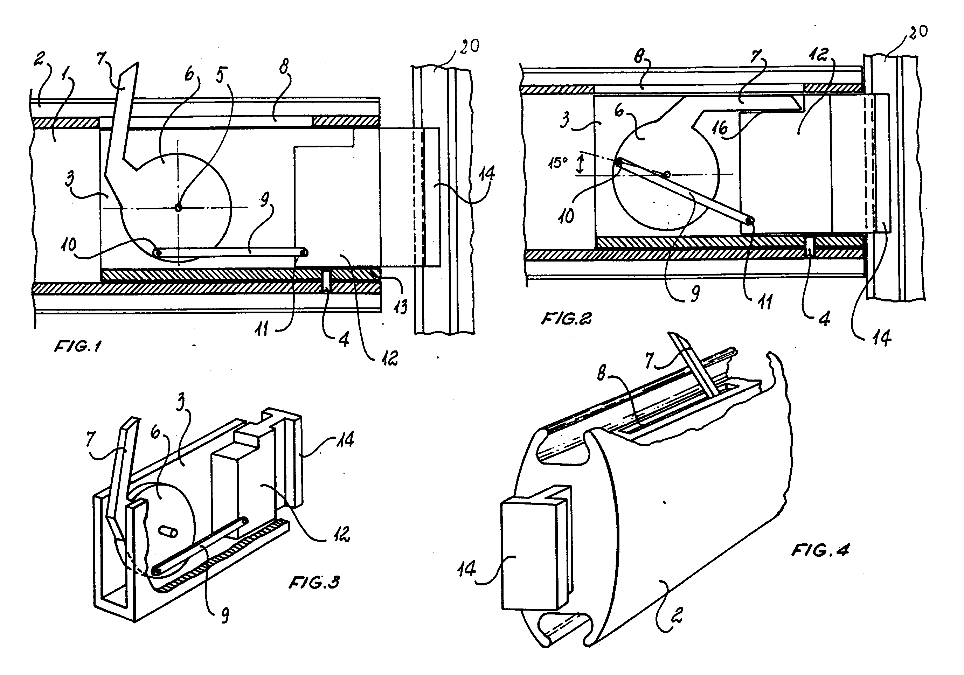

Figure 1 is a view of the connecting clamp in the open position with the fastening lever raised.

Figure 2 is a view of the connecting clamp in the closed position with the fastening lever down, providing a clamping restraint between the vertical support and the connecting rail.

Figure 3 is a perspective view (part broken) of the tie rod device, with the fastening lever raised.

Figure 4 is a view of the connecting rail with the tie rod device inside.

In order to assemble the connecting rail 2, within the hollow body 1 of which is fitted the connecting clamp in a "U" shaped block 3 fixed to the connecting rail by means of a pin 4, the end of the rail 2 is inserted in the vertical support 20 by inserting the "T" shaped clamping member 14 in a corresponding groove in the vertical support 20. The connecting clamp is in the open position. The connecting rail 2 is brought to the desired height on the vertical support 20, and the connecting clamp is closed by lowering the fastening lever 7 which causes the crank disc 6 to rotate. The crank disc 6 is restrained on its rotational axis by a lateral pin 5 connected at each end to the "U" shaped block 3. The rod 9 is attached by means of a pivot 10 to the crank disc 6 at a point which is off-centre relative to the axis of the disc. The opposite end of the rod 9 is attached by a second pivot 11 to the clamping member 14. The lowering of the fastening lever 7 causes the clamping member 14, which is connected to the fastening lever 7 by means of the rod 9, to pull the vertical member and the connecting rail 2 together. The firm connection of the vertical member and the connecting rail 2 is assured by the "T" shaped clamping member 14.

Further lowering of the fastening lever 7 ensures that the vertical support 20 remains clamped against the connecting rail 2, since the tie rod remains in tension and ensures that there is a frictional bond between the vertical support 20 and the clamping rail 2. In the first phase of lowering the fastening lever 7, until the fastening lever is inclined at 15° to the horizontal, the force in the tension rod 9 is directed such that it tends to pull the fastening lever 7 upwards and consequently cause the vertical support 20 to move away from the connecting rail 2. In the second phase, when the lever is inclined at less than 15° to the horizontal, the force in the tension rod 9 is directed such that by rotating the crank disc 6 it tends to pull the fastening lever 7 downwards, bringing the fastening lever 7 into a longitudinal slot 8 in the connecting rail 2, and into bearing contact with the surface 16 on the body 12 of the clamping member 14. The end of the tension rod 9 is now positioned above the pin 5 on the axis of the crank
disc 6 (as illustrated in figure 2). With the fastening lever 7 completely lowered, the clamping member 14 stays in tension, thus ensuring the connection between the vertical support 20 and the connecting rail 2, and thus holding the two parts in an assembled position. This assembled position is a permanent position, since the clamping member 14 in this phase tends to cause the fastening lever to rotate downwards, but the fastening lever 7 is restrained by the surface 16 on the body 12 of the clamping member 14; thus the fastening lever 7 maintains the clamping member 14 in tension, and maintains the connection between the vertical support 20 and the connecting member 2.

In order to release the connecting member 2 from the vertical support 20, a light upward pressure must be applied to the fastening lever 7 until the fastening lever is at 15° to the horizontal. Once the lever passes this inclination, the pivot 10 at the end of the tension rod 9 passes below the axis 5 of the crank disc 6, and the tension still present in the clamping member 14 will by means of the tension rod 9 raise the fastening lever 7, and release the connecting member 2 from the vertical support 20.

## Claims

1. Method of connecting profiled sections for movable modular panel systems, the connection comprising a connecting rail (2) within which is fitted a connecting clamp in a "U" shaped block (3), said connecting clamp consisting of a fastening lever (7); a crank disc (6) supported on the "U" shaped block (3) by a lateral pin (5); a "T" shaped clamping member (14); and a rod (9) connected by a pivot (10) to the crank disc (6) and by a second pivot (11) to the clamping member (14),
characterized in that
the connecting rail (2) is inserted at the desired height on a vertical support (20);
the fastening lever (7) is lowered by applying finger pressure;
the lowering of the fastening lever (7) in a first phase, until the fastening lever (7) is inclined at 15° to the horizontal, causes the clamping member (14) to pull the vertical member (20) and the connecting rail (2) together by clamping action of the "T" shaped clamping member (14) on the vertical support (20), the tension in said clamping member (14) tending to pull the fastening lever (7) upwards; and
the lowering of the fastening lever (7) in a second phase, when the lever (7) is inclined at less than 15° to the horizontal, maintains the clamping action between the vertical member (20) and the connecting rail (2), the force in the tension rod (9) being directed such that by rotating the crank disc (6) it tends to pull the fastening lever downwards, into a longitudinal slot (8) in the connecting rail (2), and into contact with a surface (16) on the body (12) of the clamping member (14).

2. Method of connecting profiled sections for movable modular panel systems according to claim 1,
characterized in that
in order to release the connecting member (2) from the vertical support (20), a light upward pressure is applied to the fastening lever (7) until the lever is at 15° to the horizontal;
when the fastening lever (20) had passed an inclination of 15° to the horizontal, the tension still present in the clamping member (14) and the tension rod (9) causes the fastening lever (7) to be raised, and the connecting member (2) to be released from the vertical suppor (20).

## Patentansprüche

1. Verfahren zur Verbindung von Profilen in tragbaren modularen Paneelsystemen, in denen das Verbindungssystem einen Querträger (2) enthält, in Inneren des Quer- ist ein Zugverbindungsbalken in einem U-förmigen Block (3) angebracht, jener Zugverbindungsbalken besteht aus einem Hebel (7); einer Drehscheibe (6), die auf dem U-förmigem Block (3) mittels eines seitlichen Zapfens (5) verbunden ist; einem eingehakten Element in T-Form (14); einer Stange (9), die mittels eines Stifts (10) mit der Drehscheibe (6) un mittels eines zweiten Stifts (11) mit dem eigehakten Element (14) verbunden ist,
dadurch gekennzeichnet:
- der Querträger (2) is auf einem Ständer (20) auf der gewünschten Höheangebracht;
- der Hebel (7) wird mit der Hand heruntergedrückt;
- das Herunterdrücken des Hebels (7) in der ersten Phase, bis der Hebel (7) in einem Winkel von 15° gegenüber der Horizontalen steht, verursacht das Zusammentreffen des eingehakten Elements (14), der Ständer (20) und des Querträgers (2) durch die Beweguns des eingehakten Elements (14) in T-Form auf den Ständer (20); die Spannung in dem obengenannten eingehakten Element (14) neigt dazu, den Hebel (7) nach oben zurückzunehmen; und
- das Herunterdrücken des Hebels (7) in einer zweiten Phase, wenn der Hebel (7) den Winkel von 15° überschreitet, wobei die eingehakte Bewegung zwischen dem Ständer (20) un dem Querträger (2) bestehen bleibt, die Kraft der Stange (9) ist so gerichtet, daß sie sich nach unten neigt, um den Hebel mittels der Rotation der Drehscheibe (6) mitzunehmen und ihn bis in das Innere des länglichen Schlitzes (8) auf dem Querträger (2) und in Kontakt mit der Unterlage (16) auf dem Körper (12) des eingehakten Elements (14) su bringen.

2. Verfahren zur Verbindung von Profilen in tragbaren modularen Paneelsystemen, nach Anspruch 1), dadurch gekennzeichnet, daß auf den Auslöser des Querträger (2) dem Ständer (20) wirdleichter Druck von unten nach oben auf den Hebel (7) ausgeübt, bis der Hebel (7) sich in einem Winkel von 15° befindet; wenn der Hebel (7) diesen Winkel von 15° überschreitet, bewirkt die Spannung, die noch in Inneren des eingehakten Elements (14) und der Stange (9) vorhanden ist, das Anheben des Hebels (7) und die Entblockung des Querträger (2) von dem Ständer (20).

## Revendications

1. Procédé pour la liaison de profilés dans des systèmes de panneaux modulaires portables, où le système jointage est composé d'une traverse (2) à l'intérieur de laquelle se trouve un tirant de jointage dans un bloc en "U" (3), le dit tirant de jointage est constitué d'un bras de levier (7); d'un disque manivelle (6) fixé sur le bloc en "U" (3) par un bondon latéral (5); d'un élément accrochant en "T" (14), et d'une tige (9) reunie par un tourillon (10) au disque manivelle (6) et par un second tourillon à l'élément accrochant (14),
caractérisé par l'innovation que:
- la traverse (2) est insérée sur le mât (20) à l'hauteur désirée;
- le bras de levier (7) est baissé en appuyant des doigts;
- l'abaissement du bras de levier (7) au cours de la première phase, jusqu'à obtenir un pivotement de 15° du bras de levier (7) par rapport à l'axe horizontal, mène l'élément accrochant en "T" (14) à traîner ensemble le mât (20) et la traverse (2) au moyen de l'action accrochante du dit élément en "T" (14) sur le mât (20), la tension du dit élément accrochant (14) tend à traîner le bras de levier (7) en haut: et
- l'abaissement du bras de levier (7) au cours de la seconde phase, lorsque le levier (7) a supéré ce pivotement de 15°, maintient l'action accrochante entre le mât (20) et la traverse (2), puisque la force de la tige (9) est orientée de façon que, à la suite de son pivotement, le disque manivelle (6) tend à traîner le bras de levier vers le bas jusqu'à l'emmener à l'intérieur de la fente longitudinale (8) sur la traverse (2) et en contact avec la base (16) sur le corps (12) de l'élément accrochant (14).

2. Procédé pour la liaison de profilés dans des systèmes de panneaux modulaires portable, selon la revendication 1), caractérisé par l'innovation que à fin d'effectuer le décrochage de la traverse (2) du mât (20), une légère pression de bas en haut vient exercée sur le bras de levier (7)jusqu'à quend le levier pivote de 15°,lorsque le levier supère ce pivotement de 15°, la tension que est encore à l'intérieur de l'élément accrochant (14) et la tige trainante (9) permettent le relevage du bras de levier (7) et le débloquement de la traverse (2) du mât (20).
